# EUROPEAN PATENT APPLICATION

(11) **EP 1 130 436 A1**
(43) Date of publication of application: **05.09.2001**
(21) Application number: 01301907.0
(22) Date of filing: 02.03.2001
(51) Int. Cl.: G02B 6/38, G02B 6/42

(54) **Protective cover having a loopback function for an optical transceiver**

(30) Priority: 02.03.2000 CA 2299865; 04.05.2000 GB 0010653
(71) Applicant: Mitel Semiconductor AB, 175 26 Järfälla (SE)
(72) Inventor: Johansson, Claes, 113 51 Stockholm (SE)
(74) Representative: Harding, Richard Patrick

(57) **Abstract**

A protective cover (20) for an optical transceiver (12) having both receivers and transmitters is provided. The protective cover has embedded parallel waveguides (24) extending from a coupling face through the body and back to the coupling face such that each waveguide is aligned with a transmitter or receiver on the transceiver unit (12). In this way the protective cover not only protects the transceiver from physical and environmental damage, but provides an easy and convenient method of testing the transmitter and receiver elements without coupling the transceiver into a system.

## Description

### Field of the Invention

This invention relates to optical transceivers for parallel data communications and, more particularly, to a protective cover for such optical transceivers wherein the cover has optical coupling paths for testing purposes.

### Background

Optical transmitters and receivers are frequently employed in high speed data communication applications such as for interconnect links between large capacity switches, routers and data transport equipment. Semi-conducting, light-emitting devices such as lasers are frequently used as the optical transmitter. A Vertical Cavity Surface-Emitting Lasers (VCSEL) is a particularly well-suited device for such applications because of the conventional and reliable fabrication processes employed in producing the lasers, and because the devices lend themselves to better alignment techniques. Silicon photo detectors such as photodiodes having a frequency sensitivity corresponding to the optical output of the VCSEL may be used as optical receivers.

In a typical implementation, several VCSELs are mounted on a carrier such that they can be energized individually in order to provide a modulated optical output signal. The optical signals are coupled to an arrangement of parallel waveguides such as a ribbon optical fibre in order to propagate multiple optical signals to a remote receiver. At the receiver end, the optical signal impinges on the photo detector which converts the optical energy into electrical energy, as is well known in the art. Such VCSEL/detector pairs are frequently used within and between the aforementioned data transport equipment for interconnections from rack to rack, shelf to shelf, board to board, and board to an optical backplane.

In addition to the above-described separate receiver and transmitter units, it is possible to assemble a transceiver wherein each transceiver unit includes both optical transmitters and optical receivers. A pair of such transceivers interconnected with a multi-mode parallel fibre ribbon cable, constitutes a complete, fully bi-directional parallel fibre link.

It is, of course, known that semi-conductor devices and in particular optical devices are subject to damage, either due to physical contact or through environmental contamination such as dust, moisture and other airborne contaminants. It is therefore important that the active face of the optical transceiver devices be adequately protected during storage and transportation.

### Summary of the Invention

Accordingly, the present invention seeks to provide a protective cover for an optical transceiver in order to protect the device from physical and environmental damage.

As a secondary feature, the present invention also provides, by way of an optical coupling path or a plurality of optical coupling paths within the cover, means for testing receiver and transmitter combinations within the transceiver.

Therefore, in accordance with a first aspect of the present invention, there is provided a protective cover for an optical transceiver unit having an array of opto-electronic devices, the array of opto-electronic devices arranged in a fixed pattern in relation to a pair of alignment pins on the transceiver unit, the protective cover having a first face for placement adjacent to and spaced from the opto-electronic devices, and a pair of alignment apertures for receiving the alignment pins to align the protective cover relative to the transceiver unit.

In a preferred embodiment of this aspect of the invention, the protective cover has a plurality of embedded, parallel waveguides extending from the first face through the body of the cover and back to the first face, the waveguides at the first face having a pattern corresponding to the fixed pattern of the opto-electronics devices.

In a still further preferred embodiment of this aspect of the invention, the opto-electronic devices include both optical receivers and optical transmitters and the parallel waveguides provide a coupling path from transmitters to receivers through the protective cover.

In accordance with a second aspect of the invention, there is provided a method of testing an optical transceiver having a plurality of optical transmitters and optical receivers in a fixed array positioned relative to a pair of alignment pins comprising: providing a coupling cover having parallel waveguides extending from a coupling face of the cover through the body of the cover and back to the coupling face, the waveguides at the coupling face being in a fixed pattern corresponding to the fixed array, the cover having a pair of apertures for receiving the pair of alignment pins; positioning the cover adjacent the transceiver such that at least one waveguide provides a coupling path from an optical transmitter to an optical receiver; energizing the optical transmitter to generate optical power, and detecting an electrical output from the receiver.

### Brief Description of the Drawings

The invention will now be described in greater detail with reference to the attached drawings wherein:
Figure 1 is a perspective view of a transceiver without protective cover;
Figure 2 is a top view of the transceiver and protective cover combination;
Figure 3 is a front view of the protective cover showing the alignment apertures and parallel waveguides;
Figure 4 is a cross-sectional view of the protective cover taken along line 4-4 of Figure 3; and
Figure 4A is a partial view of an alternative embodiment of the coupling path.

### Detailed Description of the Invention

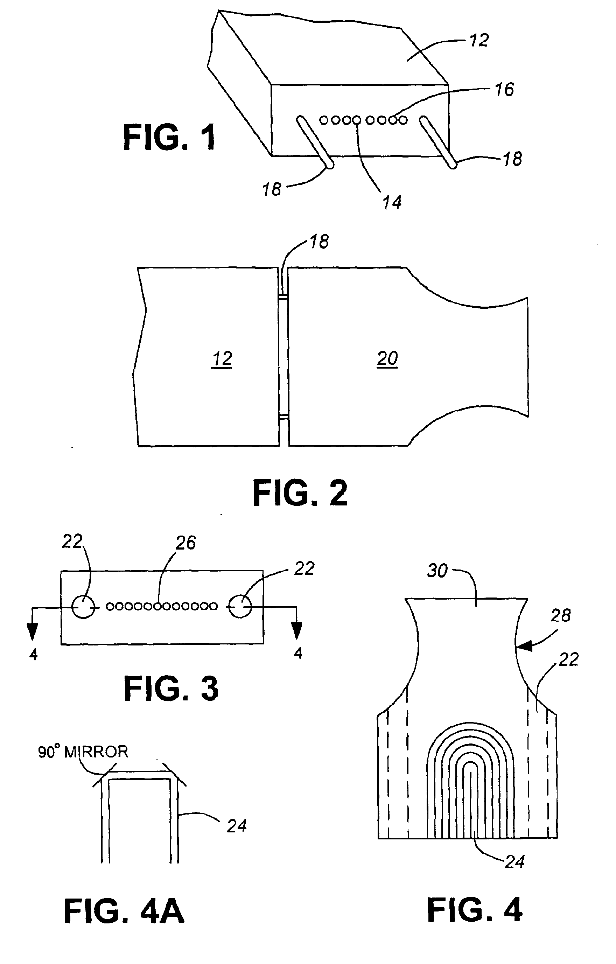

As shown in Figure 1, the optical transceiver 12 according to an exemplary embodiment of the present invention, includes a linear array of semi-conductor devices including lasers such as VCSELs 14 mounted on an arrangement of connector lines (not shown) such as a lead frame etc., so as to provide individual energizing connection to each VCSEL. Aligned with, but spaced laterally from the VCSELs 14, are optical receivers such as photodiodes 16. Also shown in Figure 1 are alignment pins 18 which project outwardly from transceiver 12 and are used for aligning the linear array with respect to the transceiver body and for accurately locating the transceiver relative to a waveguide unit (not shown) when the transceiver is used as an optical interconnect link.

In a bi-directional communication system as contemplated by the transceivers of the present invention, a pair of such transceivers will be interconnected by an optical cable connection such that an optical path will exist between the transmitters of one unit and the receivers at the opposite unit. In this way, data communication can be conducted through the fibre between opposite end units.

As is well known, VCSELs and opto-electronic devices, in general, are fragile and can be easily damaged either through physical contact or through the accumulation of airborne dust particles or other surface damaging moisture particles. It is, therefore, important that some form of protection be provided to the transceiver while in storage, system assembly and in shipping.

The present invention provides a protective cover for a transceiver as shown in the accompanying figures. As shown, the cover 20 slips onto the end face of the transceiver and is aligned to it by way of the alignment pins 18. In a preferred embodiment, the pins 18 and apertures 22 in the cover arc configured such that the cover is held in place simply by the alignment pins. It is, of course, within the scope of the invention to include other attachment means such as a clip (not shown).

According to the preferred embodiment of the invention, the protective cover also includes parallel fibres 24 or waveguides embedded within the body of the protective cover. As best seen in Figure 4, the coupling face 26 of the fibres have the same pattern and pitch as the transmitter and receiver combinations on the transceiver unit.

This embodiment is particularly advantageous for transceivers having spacing between active elements or channels in the order of 250 µm. In such applications optical waveguides can be used instead of fibers. This provides a miniaturized dust cap having an optical feedback loop usable for MT ribbon fiber connectors.

Additionally, the alignment holes and coupling face of the waveguide are arranged such that when the cover is positioned on the transceiver, the receiver and transmitter combinations are aligned with the coupling face of the respective waveguides,

It will be apparent from the foregoing that when the protective cover with embedded waveguides is affixed to the transceiver, a coupling path will exist from selected transmitters to selected receivers In this way, the individual devices can be tested simply by energizing each VCSEL in turn and noting the output on the corresponding receiver. This pre-assembly testing procedure simplifies device verification which otherwise can be quite complicated.

As shown in Figure 4, the cover may alternatively have a special shape 28 at the end 30 opposite to the waveguides to assist in removal of the cover from the transceiver.

As a further alternative, shown in Figure 4A, the optical waveguides could have two orthogonal 90° mirrors in the light paths to reflect the light from one optical port to the other. This alternative could be advantageous in applications where, for example, the bend radius would be too small for fibers or waveguides.

Although a specific embodiment of the invention has been described and illustrated, it will be apparent to one skilled in the art that various modifications can be made without departing from the basic concept- It is to be understood, however, that such modifications will fall within the true scope of the invention as defined by the appended claims.

## Claims

1. A protective cover for an optical transceiver unit having an array of semiconducting devices, the array of semi-conducting devices arranged in a fixed pattern in relation to a pair of alignment pins on the transceiver unit, the protective cover having a first face for placement adjacent to and spaced from the semi-conducting devices and a pair of alignment apertures for receiving the alignment pins to align the protective cover relative to the transceiver unit.

2. A protective cover as defined in claim 1 having a plurality of embedded, parallel waveguides extending from the first face through the body of the cover and back to the first face, the waveguides at the first face having a pattern corresponding to the fixed pattern of the semi-conducting devices.

3. A protective cover as defined in claim 2 wherein the semi-conducting devices include both light emitting devices and photo-detecting devices whereby light emitted from respective light emitting devices is coupled to photo-detecting devices.

4. A protecting cover as defined in claim 3 for use in testing the transceiver unit.

5. A protective cover as defined in claim 1 wherein the alignment apertures in the protective cover are configured in relation to the alignment pins to retain the protective cover in fixed engagement with the transceiver unit.

6. A protective cover as defined in claim 5 wherein said cover has a gripping portion shaped to permit removal of the cover from the transceiver unit.

7. A protective cover as defined in claim 2 having a feedback loop for use with optical transceivers comprising closely spaced semi-conducting devices.

8. A protective cover as defined in claim 7 wherein the spacing between semi-conducting devices is approximately 250 µm.

9. A protective cover as defined in claim 7 wherein said feedback loop includes a pair of orthogonal 90° mirrors.

10. A method of testing an optical transceiver having a plurality of optical transmitters and optical receivers in a fixed array positioned relative to a pair of alignment pins comprising:
providing a coupling cover having parallel waveguides extending from a coupling face of the cover through the body of the cover and back to the coupling face, the waveguides at the coupling face being in a fixed pattern corresponding to the fixed array, the cover having a pair of apertures for receiving said pair of alignment pins;
positioning the cover adjacent the transceiver such that at least one waveguide provides a coupling path from an optical transmitter to an optical receiver;
energizing the optical transmitter to generate optical power, and
detecting an electrical output from the receiver.

11. The method of claim 10 wherein the coupling cover also provides protection to the optical transceiver during handling and shipping.
